# EUROPÄISCHE PATENTSCHRIFT

(11) **EP 1 763 312 B1**
(45) Veröffentlichungstag und Bekanntmachung des Hinweises auf die Patenterteilung: **02.04.2008**
(21) Anmeldenummer: 05700353.5
(22) Anmeldetag: 03.02.2005
(51) Int. Cl.: A47J 31/40, A61L 2/07

(54) **VORRICHTUNG ZUR ZUBEREITUNG VON KLEINKINDNAHRUNG**
DEVICE FOR PREPARING FOOD FOR YOUNG CHILDREN
DISPOSITIF POUR PREPARER DE LA NOURRITURE POUR ENFANTS EN BAS AGE

(30) Priorität: 14.06.2004 CH 999042004
(43) Veröffentlichungstag der Anmeldung: 21.03.2007
(73) Patentinhaber: Och, Mathias, 1820 Montreux (CH); Rofeh, David, 1800 Vevey (CH); Veenhuys, David, 1619 Les Paccots (CH)
(72) Erfinder: OCH, Mathias, CH-1820 Montreux (CH); VEENHUYS, David, CH-1619 Les Paccots (CH)
(74) Vertreter: Salgo, Reinhold Caspar
(86) Internationale Anmeldenummer: PCT/CH2005/000058
(87) Internationale Veröffentlichungsnummer: WO 2005/120313

(56) Entgegenhaltungen:
- WO-A-90/04940
- WO-A-03/084377
- WO-A-03/094624
- DE-A- 1 800 313

## Beschreibung

Die Erfindung betrifft eine Vorrichtung zur Zubereitung von Kleinkindnahrung aus Pulver gemäss dem Oberbegriff des Patentanspruches 1.

Apparate zur Zubereitung von Kleinkindnahrung aus Pulver bestehen in der Regel aus einem Wasserreservoir, in welchem eine Wassermenge auf eine gewünschte Temperatur aufgeheizt wird und mittels Thermostat auf dieser Temperatur gehalten wird. Dem Wasserreservoir kann beispielsweise ein schwerkraftgetriebener Aktivkohlefilter vorgeschaltet werden, welcher das Wasser von Fremdstoffen reinigt.
In WO 99/15056 wird ein solcher Apparat offenbart. Im Wesentlichen wird ein vorher filtriertes und beispielsweise mit UV-Licht desinfiziertes Wasservolumen auf eine einstellbare Temperatur gebracht und gehalten, damit jederzeit richtig temperiertes Wasser für eine sofortige Zubereitung von pulverförmiger Kleinkindnahrung vorhanden ist. Die Vorrichtung verhindert Verbrennungen durch zu heisses Wasser bei Bediener und Kleinkind.
Wird das erwärmte Wasser lange nicht gebraucht, besteht die Möglichkeit, dass sich bei den idealen Temperaturen Restkeime vermehren und die Kleinkindnahrung kontaminieren.

WO 03/084377 offenbart einen anderen Apparat.
Es ist Aufgabe der Erfindung, Vorrichtungen zur Zubereitung von Kleinkindnahrung benutzerfreundlicher, schneller und zugleich sicherer zu machen, wobei die Nahrungszubereitung und Vorbereitung des Geschirrs weitgehend automatisiert werden soll und die Sterilität der Nahrung auf jeden Fall gewährleistet sein sollte.

Die Lösung der Aufgabe ist wiedergegeben im kennzeichnenden Teil des Patentanspruches 1 hinsichtlich ihrer Hauptmerkmale, in den weiteren Patentansprüchen hinsichtlich weiterer vorteilhafter Ausbildungen.

Die Erfindung wird näher erläutert anhand der beigefügten Zeichnungen. Es zeigen
- Fig. 1: ein erstes Ausführungsbeispiel einer Vorrichtung zur Zubereitung von Kleinkindnahrung aus Pulver in schematischer Darstellung,
- Fig. 2: ein zweites Ausführungsbeispiel einer Vorrichtung zur Zubereitung von Kleinkindnahrung aus Pulver in schematischer Darstellung.

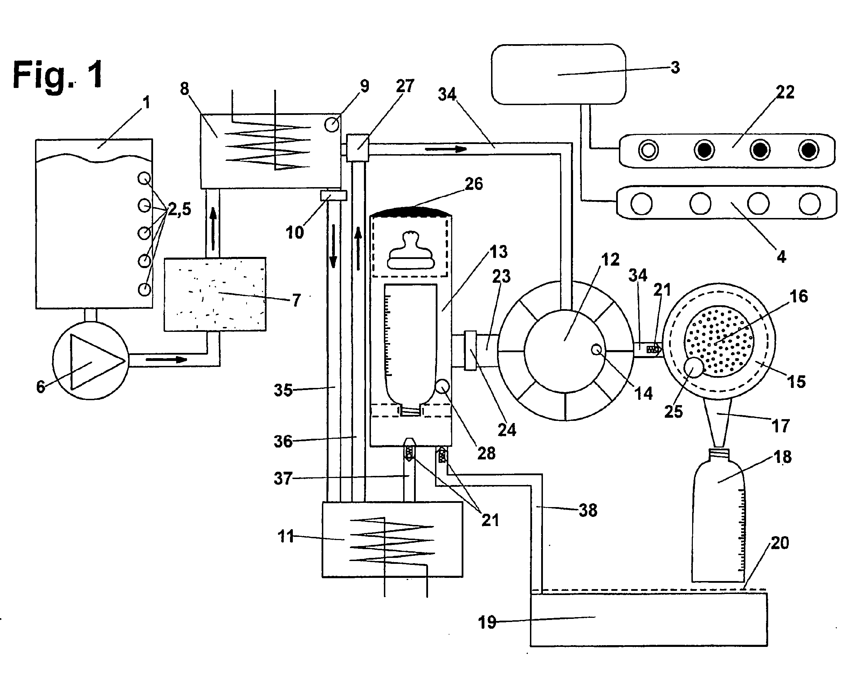

In Fig. 1 ist ein erstes Ausführungsbeispiel der Erfindung schematisch dargestellt. Ein Wasserbehälter 1 kann mit Leitungswasser aufgefüllt werden. Es ist im Erfindungsgedanken enthalten, dass die Frischwasserzufuhr alternativ direkt über einen Leitungsanschluss an die Trinkwasserversorgung erfolgt. Der Wasserbehälter 1 erübrigt sich bei einer derartigen Ausführung. Der Wasserbehälter 1 ist mit einem Wasserstandssensor 2 ausgerüstet, der bei Erreichen eines minimalen Wasserstandes im Wasserbehälter 1 diese Information einer elektronischen Steuer- und Regeleinheit 3 übermittelt, worauf diese Steuer- und Regeleinheit 3 auf einer Anzeigeeinheit 4 ein akkustische und/oder optisches Warnsignal ausgibt und den Betrieb der Vorrichtung stoppt, bis Wasser nachgefüllt worden ist. Der Wasserstandssensor 2 kann beispielsweise auch aus mehreren Wasserstandssensoren 2 bestehen, mit Hilfe deren Signale die Steuer- und Regeleinheit 3 den aktuellen Füllstand auf die Anzeigeeinheit 4 ausgeben kann. Mehrere nulldimensionale Wasserstandssensoren 2 können zusammen eine eindimensionale Sensoreinheit 5 bilden. Es ist auch die Verwendung einer einzigen den Füllstand kontinuierlich messende Sensoreinheit 5 denkbar. Zusätzlich kann der Wasserbehälter 1 vollständig oder teilweise aus transparentem Material gefertigt sein oder es kann ein Schwimmer vorhanden sein, damit der Wasserstand visuell am Wasserbehälter 1 überprüft und beispielsweise anhand einer Skala abgelesen werden kann. Unten am Wasserbehälter 1 ist eine Wasserleitung angebracht, durch welche eine Wasserpumpe 6 mit Wasser beschickt wird. Die Wasserpumpe 6 pumpt das Wasser durch eine Filtereinheit 7 zu einer Heizeinheit 8. Diese Filtereinheit 7 funktioniert beispielsweise mit Aktivkohle oder umkehrosmotisch und kann als einfach ersetzbarer Wechselfilter ausgeführt sein. Das filtrierte Wasser wird von der Filtereinheit 7 zur Heizeinheit 8 geleitet. Diese Heizeinheit 8 ist beispielsweise ein elektrischer Durchlauferhitzer, welcher das Wasser auf eine Temperatur im Bereich des, aber unterhalb des Siedepunktes erhitzt, auf beispielsweise 90 °C bis 100°C. Diese Erhitzung bewirkt ein Abtöten von allenfalls trotz Filtrierung noch im Wasser vorhandenen Krankheitserregern und desinfiziert das Wasser zusätzlich.

Die Wassertemperatur des die Heizeinheit 8 verlassenden Wassers wird mittels eines Temperatursensors 9 erfasst und an die Steuer- und Regeleinheit 3 übermittelt. Die elektrischen Leitungen von und zur Steuer- und Regeleinheit 3 wurden der besseren Übersichtlichkeit halber in den Figuren nicht dargestellt. Es ist klar, dass jedes Bauteil, dass durch die Steuer- und Regeleinheit 3 gesteuert wird oder ihr Messdaten zukommen lässt mit mindestens einer elektrischen Leitung mit ihr verbunden ist. Dies betrifft unter anderen sämtliche Sensoren, Motoren, elektromagnetischen Ventile und Heizelemente. Die Wasserdurchflussrate, das heisst die Pumpleistung der Wasserpumpe 6 und die Heizleistung der Heizeinheit 8, können mit Hilfe der Daten des Temperatursensors 9 so geregelt werden, dass das Wasser die Heizeinheit 8 mit einer konstanten Temperatur T1 verlässt. Das Wasser, welches die Heizeinheit 8 verlässt, kann mittels schliessbarer Ventile 10,27 entweder via eine Wasserleitung 35 einer Dampferzeugereinheit 11 oder via Leitung 34 einer Kühlungseinheit 12 und anschliessend einer Dosiereinheit 15 zugeführt werden. Die Dampferzeugereinheit 11 heizt das einfliessende Wasser weiter, über den Siedepunkt des Wassers auf. Der entstehende Dampf kann zur Sterilisation der Vorrichtung selbst oder zur Sterilisation beispielsweise der Milchflasche und des Lutschers oder der Erwärmung von fester oder breiförmiger Kleinkindnahrung in einer Dampfkammer 13 verwendet werden. Die Dampfkammer 13 weist eine mittels eines Sicherheitsdeckels 26 verschliessbare Öffnung auf.

Zur Getränkezubereitung wird das Wasser durch eine Kühlungseinheit 12 geleitet, wo es mittels Luftkühlung unterstützt durch einen regelbaren elektrischen Lüfter auf eine via Bedienungseinheit 22 einstellbare trinkbereite Temperatur von beispielsweise 20 °C bis 45 °C heruntergekühlt wird. Auch in der Kühlungseinheit 12 ist wiederum ein Temperatursensor 14 integriert, dessen Temperaturdaten von der Steuer- und Regeleinheit 3 zur Regelung der Lüfterdrehzahl der Kühlungseinheit 12 sowie der Pumpleistung der Wasserpumpe 6 verwendet werden können. Dabei wird gewährleistet, dass die Temperatur 45 °C nie übersteigt und so Verbrennungen und Verbrühungen beim Kleinkind durch zu heisse Getränke vermieden werden. Das wunschgemäss heruntergekühlte Wasser gelangt anschliessend durch die Fortsetzung der Leitung 34 und ein federbelastetes Überdruckventil 21 in eine Dosiereinheit 15. In der Dosiereinheit 15 strömt das Wasser durch eine Kleinkindnahrungspulver enthaltende Kapsel 16, löst dabei dieses Kleinkindnahrungspulver auf, und das fertige Getränk strömt durch einen Auslass 17 in ein bereitgestelltes Trinkgefäss 18. Mittels eines Sensors 25 kann festgestellt werden, ob eine Kapsel 16 in der Dosiereinheit 15 eingelegt ist. Unter dem Auslass 17 ist ein Rückhaltebehälter 19 angebracht, der so ausgestaltet ist, dass verschüttetes oder überlaufendes Wasser oder Getränk vom Rückhaltebehälter 19 aufgenommen werden kann. Beispielsweise ist der Rückhaltebehälter 19 mit einer Gitterabdeckung 20 abgedeckt, auf welche das Trinkgefäss 18 gestellt werden kann. Die Dampfkammer 13 ist ebenfalls mittels einer Leitung 38 mit dem Rückhaltebehälter 19 verbunden, wobei diese Leitung 38 ein federbelastetes Überdruckventil 21 aufweist und den überschüssigen Dampf - bei Benutzung der Dampfkammer 13 für Sterilisations- oder Nahrungserwärmungszwecke - sowie Kondensat aus der Dampfkammer 13 in den Rückhaltebehälter 19 entweichen lässt. Dazu ist die Leitung 38 im Wesentlichen am tiefsten Punkt der Dampfkammer 13 angebracht. Die Kühlungseinheit 12 ist mittels einer Luftleitung 23 mit der Dampfkammer 13 verbunden. Ein Verschluss 24, beispielsweise ein Ventil oder ein Schieber in der Luftleitung 23 kann nach der Sterilisation von Geräten in der Dampfkammer 13 manuell oder automatisch geöffnet werden, und die Kühlungseinheit 12 bläst anschliessend Luft zur Kühlung in die Dampfkammer 13 ein. Dabei ist der Sicherheitsdeckel 26 der Dampfkammer 13 geöffnet.

Nebst einer Anzeigeeinheit 4 verfügt die erfindungsgemässe Vorrichtung auch über mindestens eine Bedienungseinheit 22. Die Bedienungseinheit 22 besteht beispielsweise aus Tasten, Schaltern, Reglern oder anderen Eingabegeräten zur Eingabe von Daten und Befehlen in die Steuer- und Regeleinheit 3 durch den Benutzer der Vorrichtung. Beispielsweise kann mittels Bedienungseinheit 22 die Vorrichtung ein- und ausgeschaltet oder die Solltemperatur des Getränks gewählt werden. Die Anzeigeeinheit 4 kann beispielsweise aus mehrfarbigen Leuchtdioden und/oder einer Flüssigkristallanzeige bestehen. Die Anzeigeeinheit 4 kann jedoch auch akustische Signalgeber umfassen. Dem Fachmann sind weitere Möglichkeiten bekannt, wie der Betriebszustand mittels Bildschirmen oder anderen visuellen und/oder akustischen Signalen angezeigt und Dateneingaben visualisiert und quittiert werden können. Es ist auch möglich, dass Anzeigeeinheit 4 und Bedienungseinheit 22 ganz oder teilweise in eine einzige Einheit zusammengefasst werden, beispielsweise bei Verwendung eines berührungsempfindlichen Bildschirms.

Die Steuer- und Regeleinheit 3 empfängt und verarbeitet die elektrischen Signale aller Sensoren und steuert alle Aktoren, wie beispielsweise die Wasserpumpe 6, schliessbare Ventile 10,27, Lüfter, und die Heizelemente in Heizeinheit 8 und Dampferzeugereinheit 11. Sie besteht im Wesentlichen aus einem Mikroprozessor und einem nichtflüchtigen, beispielsweise wiederbeschreibbaren Datenspeicher, welcher das Steuer- und Regelprogramm enthält, sowie aus einem flüchtigen Arbeitsspeicher für die Zwischenspeicherung von aktuellen Betriebsparametern, wie beispielsweise Temperaturdaten.

Die Vorrichtung ist multifunktional und kann im Wesentlichen sechs Aufgaben übernehmen:
Sterilisation Geräte: Erstens kann die Schoppenflasche und der Lutscher oder auch andere Geräte, wie beispielsweise ein Schnuller, in der Dampfkammer 13 sterilisiert werden. Dazu wird das Ventil 27 in der Leitung 34 zur Kühlungseinheit 15 vollständig geschlossen und das Ventil 10 in der zur Dampferzeugereinheit 11 führenden Wasserleitung 35 geöffnet. Als Ventile werden beispielsweise elektromagnetische Ventile verwendet. Das in der Heizeinheit 8 vorgeheizte Wasser fliesst von der Heizeinheit 8 in die Dampferzeugereinheit 11, wird dort weiter erhitzt und strömt dampfförmig via Dampfleitung 37 in die Dampfkammer 13, welche ihrerseits mittels Sicherheitsdeckel 26 verschlossen ist. Der Dampf strömt bei Erreichen des eingestellten Überdruckes durch das federbelastete Überdruckventil 21 via Leitung 38 in den Rückhaltebehälter 19, welcher das Kondensat des Dampfes auffängt. Das Überdruckventil 21 ermöglicht Überdrucke in der Dampfkammer. Beispielsweise einen Überdruck von 2.4 bar und somit eine Dampftemperatur von 125 °C, welche für eine Sterilisation benötigt wird.
Kühlung: Zweitens können die Geräte in der Dampfkammer 13 im Anschluss an die Sterilisation gekühlt werden. Dazu wird der Sicherheitsdeckel 26 mindestens teilweise und der Verschluss 24 vollständig geöffnet, damit die Kühlungseinheit 12 Luft via Luftleitung 23 in die Dampfkammer 13 einblasen kann und diese Luft via Dampfkammeröffnung entweichen kann.
Getränkezubereitung: Drittens wird für die eigentliche Getränkezubereitung das Ventil 27 so geöffnet, dass die Leitung 34 zwischen Heizeinheit 8 und Kühlungseinheit 12 geöffnet ist. In Richtung Dampferzeugereinheit 11 bleibt das Ventil 27 zur Dampfleitung 36 dagegen unverändert geschlossen. Das heisse Wasser strömt in die Kühlungseinheit 12, wird dort auf die gewünschte Getränketemperatur heruntergekühlt, fliesst anschliessend in die Dosiereinheit 15, wo es das Pulver für die Kleinkindnahrung auflöst und das fertige Getränk durch den trichterförmigen Auslass 17 in das bereitgestellte Trinkgefäss 18 gelangt.
Spülen der Vorrichtung: Viertens können nach der Getränkezubereitung die Leitung 34, die Kühlungseinheit 12, die Dosiereinheit 15 und der Auslass 17 bei unveränderter Einstellung des Ventils 27 mit heissem oder auch kaltem Wasser gespült werden. Das Spülwasser gelangt durch den Auslass 17 in den Rückhaltebehälter 19.
Sterilisation der Vorrichtung: Fünftens können nach der Spülung der Vorrichtung die Leitung 34 und die Kühlungseinheit 12 mit Dampf sterilisiert werden. Dazu wird das Ventil 27 so geöffnet, dass es den Dampf von der Dampferzeugereinheit 11 via Dampfleitung 36 und Leitung 34 in Richtung Kühlungseinheit 12 durchlässt. Die Leitung zwischen Ventil 27 und Heizeinheit 8 wird hingegen durch das Ventil 27 verschlossen. Ausserdem ist das Ventil 10 geöffnet und die Dampferzeugereinheit 11 ist aktiv und erzeugt Dampf, welcher via Ventil 27 zur Kühlungseinheit 12 strömt, die Dosiereinheit 15 passiert und durch den Auslass 17 entweicht.
Erwärmen von Nahrung: Sechstens kann feste oder breiförmige Nahrung in der Dampfkammer 13 erwärmt werden. Die Situation ist dieselbe wie unter Zweitens, der Sterilisation von Geräten, erwähnt. Anstelle der zu sterilisierenden Geräte wird das Nahrungsmittel, beispielsweise in einem herausnehmbaren Gitterkorb, durch die Dampfkammeröffnung in die Dampfkammer 13 eingebracht. Die Dampftemperatur wird tiefer gehalten als während der Sterilisation. Ein Temperatursensor 28 im Innern der Dampfkammer 13 erfasst die notwendigen Temperaturdaten, um die Nahrung auf die gewünschte Temperatur zu erwärmen.

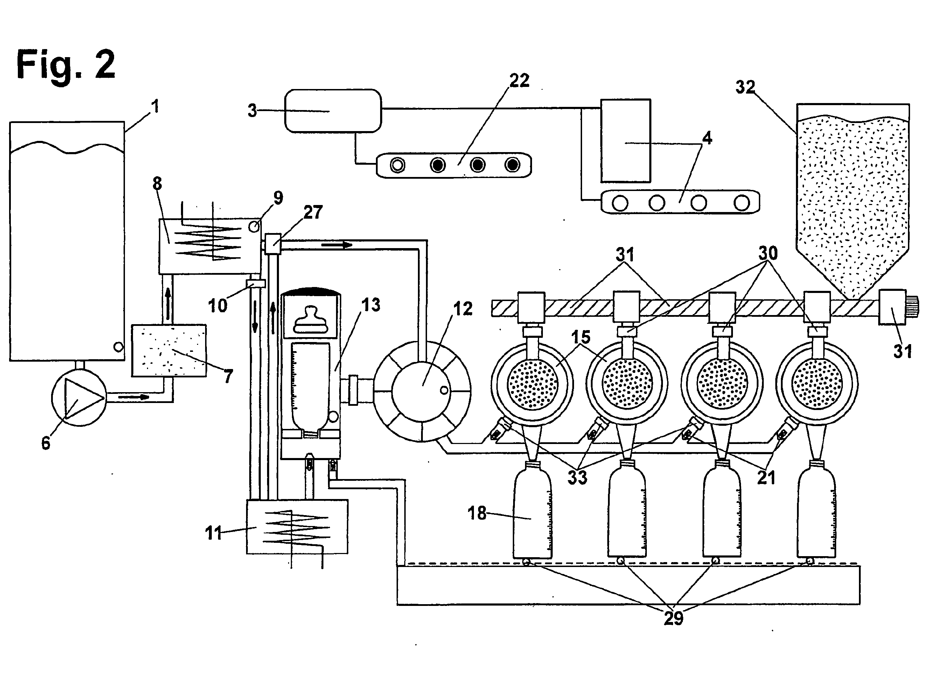

In Fig. 2 ist ein zweites Ausführungsbeispiel einer erfindungsgemässen Vorrichtung schematisch dargestellt. Diese Vorrichtung kann gleichzeitig, das heisst parallel, mehrere Kleinkindgetränke zubereiten. Im Unterschied zum ersten Ausführungsbeispiel sind mehrere Dosiereinheiten 15 mit mehreren Auslässen 17 vorhanden. Unter jedem Auslass kann ein Sensor 29 angebracht sein, welcher die Steuer- und Regeleinheit 3 mit Daten beliefert über An- oder Abwesenheit eines Trinkgefässes 18 unter dem Auslass 17. Detektiert der Sensor 29 kein Trinkgefäss 18, so wird das öffenbare, vor der Dosiereinheit 15 positionierte Ventil 30 nicht geöffnet und es fliesst kein Getränkpulver in die Dosiereinheit 15. Gleichzeitig, das heisst bei Abwesenheit eines Trinkgefässes 18 unter dem Auslass 17, wird ein Ventil 33 geschlossen, welches im Abzweiger in Richtung Dosiereinheit 15 der von der Kühleinheit 12 kommenden Leitung 34 nach dem Überdruckventil 21 angebracht ist. Somit fliesst aus dem Auslass 17 unter welchem kein Trinkgefäss 18 steht kein Getränk. Dieses Ausführungsbeispiel verfügt zudem über eine alternativ ausgestaltete Dosiereinheit 15. Das Kleinkindnahrungspulver wird nicht mittels pulverbefüllter Kapseln 16 sondern mittels einer Fördereinrichtung 31 aus einem Pulverbehälter 32 in die Dosiereinheit 15 eingebracht, wobei das Ventil 30 geschlossen wird, sobald die korrekte Pulvermenge in die Dosiereinheit 15 eingebracht worden ist. Zur Feststellung der korrekten Pulverbefüllung können auch weitere Sensoren, die Menge des eingebrachten Pulvers erfassen, in der Dosiereinheit 15 vorhanden sein. Die Fördereinrichtung 31 kann beispielsweise, wie in Fig. 2 dargestellt, als Schneckentrieb mit serieller Beschickung ausgeführt sein. Bei einer Vorrichtung zur simultanen und parallelen Bereitung von Getränken, kann erfindungsgemäss die Dampfkammer so gross dimensioniert werden, dass in ihr eine der Anzahl an Auslässen 17 entsprechende Anzahl Trinkgefässe 18 gleichzeitig sterilisiert werden kann.

Dem Fachmann sind jedoch weitere Möglichkeiten zur Pulverbeförderung und -dosierung bekannt, beispielsweise ein parallele Beschickung. Die Möglichkeiten werden hier nicht alle ausgeführt, sind jedoch im Erfindungsgedanken enthalten. Anstelle eines Pulverbehälters 32, der mit beliebigem Pulver gefüllt werden kann, ist auch der Einsatz einer Pulververpakkung denkbar, welche direkt oder mit Hilfe eines Adapters in die Vorrichtung eingelegt werden kann und so einen Pulverbehälter 32 unnötig macht.

Selbstverständlich kann die Vorrichtung bei Verwendung anderer Getränkepulver auch zur Herstellung anderer Heiss- und Warmgetränke, wie beispielsweise Kaffee und Tee, verwendet werden.

## Patentansprüche

1. Vorrichtung zur Zubereitung von Kleinkindnahrung aus Pulver mit einer Wasserpumpe (6), einer Filtereinheit (7), einem Auslass (17), einem Rückhaltebehälter (19), einer Heizeinheit (8), einer Anzeigeeinheit (4) und einer Bedienungseinheit (22) **dadurch gekennzeichnet, dass**
- eine Kühlungseinheit (12) mit einem Temperatursensor (14) vorhanden ist, mittels welcher das in der Heizeinheit (8) erhitzte und via eine Leitung (34) der Kühlungseinheit (12) zugeführte Wasser auf eine für die orale Verabreichung an Kleinkinder geeignete Temperatur heruntergekühlt werden kann, wobei eine Steuer- und Regeleinheit (3) die Temperatur auf einen vorgegebenen, einstellbaren Wert regelt,
- dass weiter eine Dampfkammer (13) und eine Dampferzeugereinheit (11) vorhanden sind, wobei eine Wasserleitung (35) die Heizeinheit (8) mit der Dampferzeugereinheit (11) verbindet und durch diese die Dampferzeugereinheit (11) mit in der Heizeinheit (8) aufgeheiztem Wasser beschickt werden kann,
- dass eine Dampfleitung (37) vorhanden ist, durch welche der Dampf von der Damperzeugereinheit (11) in die Dampfkammer (13) strömt,
- dass eine Dampfleitung (36) vorhanden ist, welche die Dampferzeugereinheit (11) mit der Leitung (34) verbindet,
- dass eine Leitung (38) vorhanden ist, welche die Dampfkammer (13) mit dem Rückhaltebehälter (19) verbindet, wobei die Leitung (38) die Dampfkammer (13) im Wesentlichen an deren tiefstem Punkt verlässt,
- dass eine Dosiereinheit (15) vorhanden ist, in welcher das Pulver mit dem in der Heizeinheit (8) erhitzten und anschliessend in der Kühlungseinheit (12) gekühlten Wasser zu einem Getränk vermengt wird, welches via Auslass (17) in ein bereitstehendes Gefäss (18) fliesst,
- und dass eine elektronische Steuer- und Regeleinheit (3) vorhanden ist.

2. Vorrichtung zur Zubereitung von Kleinkindnahrung aus Pulver nach Patentanspruch 1, **dadurch gekennzeichnet, dass** die Heizeinheit (8) das Wasser auf 90 °C bis 100°C erhitzt und die Temperatur des Getränkes nach Durchgang durch die Kühlungseinheit (12) in einem Bereich von 20 °C und 45 °C einstellbar ist.

3. Vorrichtung zur Zubereitung von Kleinkindnahrung aus Pulver nach einem der Patentansprüche 1 bis 2, **dadurch gekennzeichnet, dass**
Überdruckventile (21) vorhanden sind, um unter Dampf einen Überdruck in der Dampfkammer (13) und je nach Ventilstellung den Leitungen (34,35,36,37) vor den Überdruckventilen (21) zu erzeugen und damit Sterilisationstemperaturen von über 100 °C zu ermöglichen.

4. Vorrichtung zur Zubereitung von Kleinkindnahrung aus Pulver nach einem der Patentansprüche 1 bis 3, **dadurch gekennzeichnet, dass**
schliessbare Ventile (10, 27) vorhanden sind, mit welchen das aufgeheizte Wasser aus der Heizeinheit (8) direkt in die Kühlungseinheit (12) geleitet werden kann, oder mit welchen das aufgeheizte Wasser aus der Heizeinheit (8) direkt in die Dampferzeugereinheit (11) geleitet werden kann und der Dampf anschliessend entweder via Dampfleitung (37) der Dampfkammer (13) oder via Dampfleitung (36,34) der Kühlungseinheit (12) zugeführt werden kann.

5. Vorrichtung zur Zubereitung von Kleinkindnahrung aus Pulver nach einem der Patentansprüche 1 bis 4, **dadurch gekennzeichnet, dass**
die Dampfkammer (13) mit einem Sicherheitsdeckel (26) dampfdicht verschlossen werden kann und via einer mit einem Überdruckventil (21) versehenen dritten Leitung mit dem Rückhaltebehälter (19) verbunden ist.

6. Vorrichtung zur Zubereitung von Kleinkindnahrung aus Pulver nach einem der Patentansprüche 1 bis 5, **dadurch gekennzeichnet, dass**
die Kühlungseinheit (12) eine ventilatorunterstützte Luftkühlung ist.

7. Vorrichtung zur Zubereitung von Kleinkindnahrung aus Pulver nach Patentanspruch 6, **dadurch gekennzeichnet, dass**
eine Luftleitung (23) mit einem Verschluss (24) vorhanden ist, wobei zur Kühlung der sterilisierten Geräte in der Dampfkammer (13) der Verschluss (24) geöffnet werden kann und der Ventilator der Kühlungseinheit (12) Umgebungsluft in die Dampfkammer bläst.

8. Vorrichtung zur Zubereitung von Kleinkindnahrung aus Pulver nach einem der Patentansprüche 1 bis 7, **dadurch gekennzeichnet, dass**
Mittel vorhanden sind, zum Einbringen von Behältern mit fester Kleinkindnahrung in die Dampfkammer (13), zwecks Erwärmung der Kleinkindnahrung mittels Dampf.

9. Vorrichtung zur Zubereitung von Kleinkindnahrung aus Pulver nach einem der Patentansprüche 1 bis 8, **dadurch gekennzeichnet, dass**
Mittel vorhanden sind, zur Erfassung und Anzeige des Wasserstandes in einem Wasserbehälter (1).

10. Vorrichtung zur Zubereitung von Kleinkindnahrung aus Pulver nach einem der Patentansprüche 1 bis 9, **dadurch gekennzeichnet, dass**
Mittel vorhanden sind zur parallelen und simultanen Zubereitung von mehr als einem Getränk.

11. Vorrichtung zur Zubereitung von Kleinkindnahrung aus Pulver nach Patentanspruch 10, **dadurch gekennzeichnet, dass** Sensoren (29) zur Erkennung des Vorhandenseins eines Trinkgefässes (18) unterhalb eines Auslasses (17) vorhanden sind und dass Ventile (30,33) vorhanden sind, welche die separate Regelung und Steuerung der Zufuhr von Pulver und Wasser in jede einzelne Dosiereinheit (15) ermöglichen.

12. Vorrichtung zur Zubereitung von Kleinkindnahrung aus Pulver nach einem der Patentansprüche 1 bis 11, **dadurch gekennzeichnet, dass**
das Kleinkindnahrungspulver mittels Pulverkapseln (16) der Dosiereinheit zugeführt werden kann und dass ein Sensor (25) das Vorhandensein einer Pulverkapsel (16) erfasst.

13. Vorrichtung zur Zubereitung von Kleinkindnahrung aus Pulver nach einem der Patentansprüche 1 bis 11, **dadurch gekennzeichnet, dass**
ein Pulverbehälter (32) vorhanden ist, aus dem mittels einer Fördereinrichtung (31) die Dosiereinheit (15) beschickt werden kann.

## Claims

1. A device for preparing baby food from powder, with a water pump (6), a filter unit (7), an outlet (17), a retainer (19), a heating unit (8), a display unit (4) and an operating panel (22),
**characterized in**
- **that** a cooling unit (12) with a temperature sensor (14) is provided for cooling the water that was heated in the heating unit (8) and conveyed to the cooling unit (12) via a pipe (34) to a temperature suitable for the oral consumption by babies, wherein a control system (3) regulates the temperature to a predetermined adjustable value, in
- **that** a steam chamber (13) and a steam generating unit (11) are also provided, wherein a water pipe (35) connects the heating unit (8) to the steam generating unit (11), and wherein water heated in the heating unit (8) can be conveyed to the steam generating unit (11) through this water pipe, in
- **that** a steam duct (37) is provided, through which the steam flows from the steam generating unit (11) into the steam chamber (13), in
- **that** a pipe (38) is provided that connects the steam chamber (13) to the retainer (19), wherein the pipe (34) essentially extends away from the steam chamber (13) at the lowest point thereof, in
- **that** a dosing unit (15) is provided in which the powder is combined with the water that was heated in the heating unit (8) and subsequently cooled in the cooling unit (12) in order to produce a beverage that flows into a prepared vessel (18) through an outlet (17), and in
- **that** in electronic control system (3) is provided.

2. The device for preparing baby food from powder according to Claim 1, **characterized in that** the heating unit (8) heats the water to a temperature between 90°C and 100°C, and **in that** the temperature of the beverage lies between 20°C and 45°C after it passes through the cooling unit (12).

3. The device for preparing baby food from powder according to Claim 1 or 2, **characterized in that** pressure relief valves (21) are provided in order to generate an overpressure in the steam chamber (13) and, depending on the valve position, the pipes (34, 35, 36, 37) upstream of the pressure relief valves (21), namely in order to realize sterilization temperatures in excess of 100°C.

4. The device for preparing baby food from powder according to one of Claims 1-3, **characterized in that**
shut-off valves (10, 27) are provided for directly conveying the heated water from the heating unit (8) to the cooling unit (12) or for directly conveying the heated water from the heating unit (8) into the steam generating unit (11), and **in that** the steam can be subsequently conveyed either to the steam chamber (13) via a steam duct (37) or to the cooling unit (12) via a steam duct (36, 34).

5. The device for preparing baby food from powder according to one of Claims 1-4, **characterized in that**
the steam chamber (13) is sealed in a steam-tight fashion with a safety cover (26) and connected to the retainer (19) via a third pipe containing a pressure relief valve (21).

6. The device for preparing baby food from powder according to one of Claims 1-5, **characterized in that**
the cooling unit (12) is realized in the form of a fan-assisted air cooling unit.

7. The device for preparing baby food from powder according to Claim 6, **characterized in that**
an air duct (23) is provided that features a stopper (24), wherein the stopper (24) can be opened in order to cool the appliances sterilized in the steam chamber (13), wherein the fan of the cooling unit (12) blows ambient air into the steam chamber.

8. The device for preparing baby food from powder according to one of Claims 1-7, **characterized in that**
means are provided for introducing receptacles containing solid baby food into the steam chamber (13) in order to heat baby food with the aid of steam.

9. The device for preparing baby food from powder according to one of Claims 1-8, **characterized in that**
means are provided for detecting and displaying the water level in a water reservoir (1).

10. The device for preparing baby food from powder according to one of Claims 1-9, **characterized in that**
means are provided for the parallel and simultaneous preparation of more than one beverage.

11. The device for preparing baby food from powder according to Claim 10, **characterized in that**
sensors (29) are provided for detecting the presence of a drinking vessel (18) underneath an outlet (17), and **in that** valves (30, 33) are provided that make it possible to separately control the supply of powder and water to each individual dosing unit (15).

12. The device for preparing baby food from powder according to one of Claims 1-11, **characterized in that**
the powdered baby food is delivered to the dosing unit by means of powder capsules (16), and **in that** a sensor (25) detects the presence of a powder capsule (16).

13. The device for preparing baby food from powder according to one of Claims 1-11, **characterized in that**
a powder receptacle (32) is provided, from which the powder can be delivered to the dosing unit (15) by means of a transport mechanism (31).

## Revendications

1. Dispositif pour la préparation d'aliments en poudre pour bébés, avec une pompe à eau (6), une unité de filtrage (7), une sortie (17), un réservoir de retenue (19), une unité de chauffage (8), une unité d'affichage (4) et une unité de commande (22), **caractérisé en ce que**
- une l'unité de refroidissement (12), avec un capteur de température (14) est présente, au moyen de laquelle l'eau chauffée dans l'unité de chauffage (8) et alimentée vers l'unité de refroidissement (12), via un conduit (34) est refroidie à une température adaptée pour l'administration orale à des bébés, une unité de commande et de réglage (3) régulant la température à une valeur prédéfinie réglable,
- **en ce que**, par ailleurs une chambre à vapeur (13) et une unité de génération de vapeur (11) sont présentes, un conduit d'eau (35) reliant l'unité de chauffage (8) avec l'unité de génération de vapeur (11) et permettant d'alimenter l'unité de génération de vapeur (11) avec de l'eau chauffée dans l'unité de chauffage (8),
- **en ce qu'**un conduit de vapeur (37) est présent, à travers lequel la vapeur s'écoule de l'unité de génération de vapeur (11) dans la chambre à vapeur (13),
- **en ce qu'**un conduit de vapeur (36) est présent, qui relie l'unité de génération de vapeur (11) avec le conduit (34),
- **en ce qu'**un conduit (38) est présent, qui relie la chambre à vapeur (13) avec le réservoir de retenue (19), le conduit (38) quittant la chambre à vapeur (13) sensiblement au point le plus bas, **en ce qu'**une unité de dosage (15) est présente, dans laquelle la poudre est amalgamée avec l'eau chauffée dans l'unité de chauffage (8) et refroidie par la suite dans l'unité de refroidissement (12) en une boisson, qui via la sortie (17) s'écoule dans un récipient (18) mis à disposition
- et **en ce qu'**une unité de commande et de réglage (3) est présente.

2. Dispositif pour la préparation d'aliments en poudre pour bébés selon la revendication 1, **caractérisé en ce que** l'unité de chauffage (8) chauffe l'eau à de 90°C à 100°C et **en ce que**, après le passage de l'unité de refroidissement (12), la température de la boisson est réglable dans l'ordre de 20°C à 45°C.

3. Dispositif pour la préparation d'aliments en poudre pour bébés selon l'une quelconque des revendications 1 ou 2, **caractérisé en ce que** des soupapes de surpression (21) sont présentes, pour créer sous vapeur une dépression dans la chambre à vapeur (13) et en fonction de la position des soupapes dans les conduits (34, 35, 36, 37) en amont des soupapes de surpression (21) pour permettre de ce fait des températures de stérilisation supérieures à 100° C.

4. Dispositif pour la préparation d'aliments en poudre pour bébés selon l'une quelconque des revendications 1 à 3, **caractérisé en ce que** des soupapes fermables (10, 27) sont présentes, à l'aide desquelles l'eau chauffée peut être conduite de l'unité de chauffage (8) directement dans l'unité de refroidissement (12), ou à l'aide desquelles l'eau chauffée peut être dirigée de l'unité de chauffage (8) directement dans l'unité de génération de vapeur (11) et la vapeur peut ensuite être alimentée via le conduit de vapeur (37) vers la chambre à vapeur (13) ou via le conduit de vapeur (36, 34) vers l'unité de refroidissement (12).

5. Dispositif pour la préparation d'aliments en poudre pour bébés selon l'une quelconque des revendications 1 à 4, **caractérisé en ce que** la chambre à vapeur (13) peut se fermer de façon étanche à la vapeur par un couvercle de sécurité (26) et est reliée via un troisième conduit muni d'une soupape de surpression (21) avec le réservoir de retenue (19).

6. Dispositif pour la préparation d'aliments en poudre pour bébés selon l'une quelconque des revendications 1 à 5, **caractérisé en ce que** l'unité de refroidissement (12) est un refroidissement par air assisté par ventilateur.

7. Dispositif pour la préparation d'aliments en poudre pour bébés selon la revendication 6, **caractérisé en ce qu'**un conduit d'air (23) avec une fermeture (24) est présent, pour le refroidissement des instruments stérilisés dans la chambre à vapeur (13), la fermeture (24) pouvant s'ouvrir et le ventilateur de l'unité de refroidissement (12) soufflant de l'air ambiant dans la chambre à vapeur.

8. Dispositif pour la préparation d'aliments en poudre pour bébés selon l'une quelconque des revendications 1 à 7, **caractérisé en ce que** des moyens sont présents pour l'introduction de récipients avec des aliments solides pour bébés dans la chambre à vapeur (13), pour l'échauffement des aliments pour bébés à la vapeur.

9. Dispositif pour la préparation d'aliments en poudre pour bébés selon l'une quelconque des revendications 1 à 8, **caractérisé en ce que** des moyens sont présents pour la détection et l'affichage du niveau d'eau dans un réservoir d'eau (1).

10. Dispositif pour la préparation d'aliments en poudre pour bébés selon l'une quelconque des revendications 1 à 9, **caractérisé en ce que** des moyens sont présents pour la préparation parallèle et simultanée de plus d'une boisson.

11. Dispositif pour la préparation d'aliments en poudre pour bébés selon la revendication 10, **caractérisé en ce que** des capteurs (29) pour l'identification de la présence d'un récipient pour boisson (18) sont présents sous une sortie (17) et **en ce que** des soupapes (30, 33) sont présentes, qui permettent la régulation et la commande séparée de l'alimentation de poudre et d'eau dans l'unité de dosage (15) individuelle.

12. Dispositif pour la préparation d'aliments en poudre pour bébés selon l'une quelconque des revendications 1 à 11, **caractérisé en ce que** l'aliment pour bébés en poudre peut être alimenté vers l'unité de dosage au moyen de capsules de poudre (16) et **en ce qu'**un capteur (25) détecte la présence d'une capsule de poudre (16).

13. Dispositif pour la préparation d'aliments en poudre pour bébés selon l'une quelconque des revendications 1 à 11, **caractérisé en ce que** un réservoir à poudre (32) est présent, à partir duquel l'unité de dosage (15) peut être chargée, au moyen d'un système de transport (31).
